# EUROPÄISCHE PATENTSCHRIFT

(11) **EP 1 640 866 B1**
(45) Veröffentlichungstag und Bekanntmachung des Hinweises auf die Patenterteilung: **06.02.2008**
(21) Anmeldenummer: 05108419.2
(22) Anmeldetag: 14.09.2005
(51) Int. Cl.: G06F 11/00, G06F 11/14

(54) **Verfahren zum Überprüfen einer Gültigkeit von Daten**
Method for checking a validity of data
Procédé pour vérifier une validité de données

(30) Priorität: 24.09.2004 DE 102004046289
(43) Veröffentlichungstag der Anmeldung: 29.03.2006
(73) Patentinhaber: ROBERT BOSCH GMBH, 70442 Stuttgart (DE)
(72) Erfinder: Grabs, Manfred, 75446, Wiernsheim (DE); Buchholz, Dieter, 74343, Sachsenheim (DE)

(56) Entgegenhaltungen:
- DE-A1- 4 429 633
- DE-A1- 19 601 804
- US-A1- 2003 163 245
- US-B1- 6 324 661

## Beschreibung

Die Erfindung betrifft ein Verfahren zum Überprüfen einer Gültigkeit von Daten, die in einem dauerversorgten Schreib-Lese-Speicher eines Steuergeräts abgelegt sind, ein Steuergerät mit einem dauerversorgten Schreib-Lese-Speicher sowie ein Computerprogramm und ein Computerprogrammprodukt mit Programmcodemitteln zum Überprüfen der Gültigkeit von Daten.

### Stand der Technik

Es ist bekannt, für eine Motorsteuerung in einem Fahrzeug mit einem dauerversorgten RAM (Random Access Memory) oder allgemein Schreib-Lese-Speicher eine sog. Powerfail-Erkennung durchzuführen. Diese Powerfail-Erkennung erfolgt durch Bilden einer Checksumme über einen Bereich des dauerversorgten RAMs am Ende eines Nachlaufs eines Steuergeräts der Motorsteuerung sowie durch anschließende Prüfung dieser Checksumme nach einem Start bzw. einem Reset des Steuergeräts. Als Information, ob die Checksumme positiv geprüft wurde, wird üblicherweise ein Prüfwort geschrieben, das seinerseits nach Berechnung der Checksumme am Ende des Nachlaufs wieder zerstört wird.

Die Druckschrift DE 44 29 633 A1 beschreibt ein Verfahren für eine Vorrichtung zur Überwachung von Speichermitteln, wobei ein Inhalt eines Merkers zur Erkennung eines Fehlers ausgewertet wird. Es ist vorgesehen, dass dieser Merker eine niedrigere Datenverlustschwelle als das zu überwachende Speichermittel aufweist. Das im Rahmen dieser Druckschrift beschriebene Speichermittel umfasst drei Speicherzellen. Dabei ist vorgesehen, dass eine erste Speicherzelle als Merker dient. Dabei ist die als Merker vorgesehene erste Speicherzelle über einen Widerstand mit einer Dauerspannung verbunden, wohingegen die beiden anderen Speicherzellen direkt mit der Dauerspannung U_{D} verbunden sind. Bei dem Überwachen des Speichermittels wird lediglich der Merker überprüft.

Ein Verfahren zur Bearbeitung von Datenintegritätsfehlern bei wiederbeschreibbaren Speichern ist aus der Druckschrift US 6 324 661 B1 bekannt. Dieses Verfahren umfasst eine Definition von Hauptdaten, bei denen ein Integrationsfehler eine Funktionsstörung des überschreibbaren Speichers darstellt, sowie eine Definition von Nebendaten, bei denen ein Integrationsfehler entweder eine Funktionsstörung des überschreibbaren Speichers oder eine Unterbrechung der Versorgung der elektronischen Komponenten darstellt. Für diese genannten Daten wird bei jeder durchzuführenden Operation eine Integrationskontrolle durchgeführt. Dabei wird eine Operation gesperrt, wenn eine Integrationskontrolle wenigstens eines der Hauptdaten einen Integrationsfehler feststellt. Weiterhin wird wenigstens einem der Nebendaten ein Ersatzwert zugeordnet, der bei einer nachfolgenden Operation online einen Austausch erzwingt, wenn eine Integrationskontrolle eines der Nebendaten einen Integrationsfehler feststellt.

In der Druckschrift US 2003/0163245 A1 werden ein Verfahren und eine Vorrichtung zum Hochfahren eines Steuergeräts für ein Kraftfahrzeug aus einem zurückgesetzten Zustand beschrieben. Um nach dem Hochfahren des Steuergeräts einen durch das Zurücksetzen des Steuergeräts unterbrochenen Vorgang dort fortsetzen zu können, wo er unterbrochen wurde, sind für das Verfahren nach der Druckschrift die nachfolgenden Schritte vorgesehen: Überprüfen, ob ein zu überwachender Vorgang vor dem Zurücksetzen des Steuergeräts eingeleitet war; Fortsetzen des zu überwachenden Vorgangs, falls der zu überwachende Vorgang vor dem Zurücksetzen des Steuergeräts eingeleitet war; und Einleiten des zu überwachenden Vorgangs, falls der zu überwachende Vorgang vor dem Zurücksetzen des Steuergeräts nicht eingeleitet war. Hierbei ist weiterhin vorgesehen, eine Gültigkeit von Daten, die in einem RAM gespeichert sind, zu überprüfen. Diesbezüglich bezieht sich die vorliegende Druckschrift explizit auf die voranstehend beschriebene Druckschrift DE 44 29 633 A1.

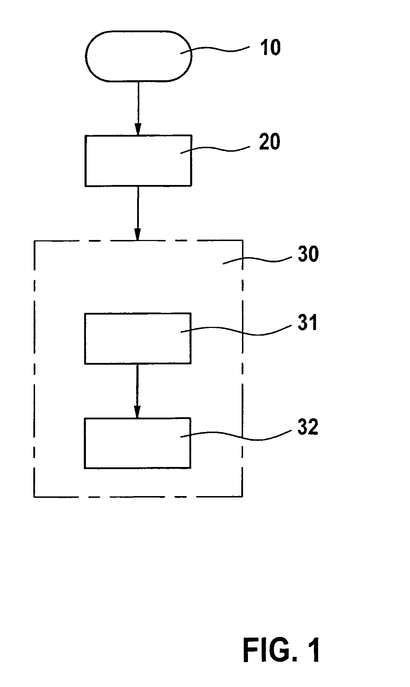

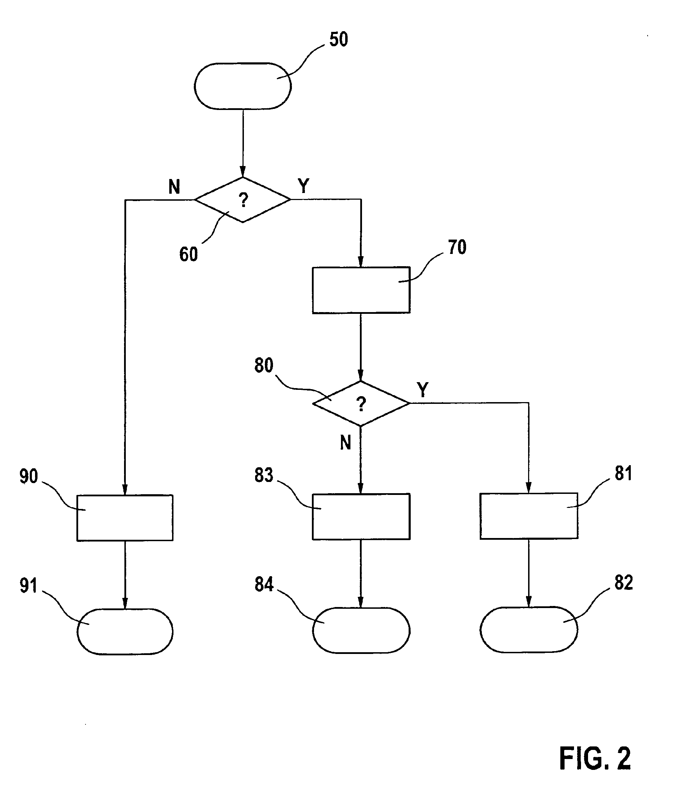

Die Figuren 1 und 2 zeigen Ablaufdiagramme eines möglichen Powerfail-Erkennungsverfahrens bei Motorsteuerungen mit einem dauerversorgten RAM. Figur 1 geht hierbei von einem laufenden Motorbetrieb 10 aus, gefolgt vom Abschalten des Motors (Motor AUS 20), wiederum gefolgt vom sogenannten Steuergeräte-Nachlauf 30. Während des Nachlaufs, also nachdem die Klemme 15 (entspricht dem Starter) ausgeschaltet wurde, wird üblicherweise der Inhalt des RAMs in einen nicht flüchtigen Speicher (wie EEPROM) kopiert. Weiterhin wird während des Steuergeräte-Nachlaufs eine Checksumme über zumindest einen Bereich des dauerversorgten RAMs gebildet. Die Checksumme wird dann in einen hierfür reservierten Speicherbereich geschrieben. Anschließend wird das Prüfwort zerstört, beispielsweise indem die Checksumme in den Speicherbereich des Prüfworts geschrieben wird. Bei dem Prüfwort handelt es sich sozusagen um ein vorgegebenes Muster (Bitmuster) im RAM, das zerstört wird, wenn die Checksumme nach Motor AUS 20 berechnet und im RAM abgelegt wurde. In Figur 1 ist der Schritt der Berechnung und des Schreibens der Checksumme mit 31, der der Zerstörung des Prüfworts mit 32 bezeichnet.

Figur 2 verdeutlicht den Verfahrensablauf beim Wiedereinschalten des Motors bzw. Steuergeräts oder einem Reset des Steuergeräts. In diesem Fall ist der Reset mit 50 bezeichnet. Zunächst erfolgt die Prüfung, ob das Prüfwort zerstört (gelöscht) ist. Diese Prüfung ist mit 60 bezeichnet. Ist das Prüfwort zerstört, kann gemäß Ablaufdiagramm nach Figur 1 davon ausgegangen werden, dass beim Abschalten die Checksumme über den RAM-Bereich gebildet und geschrieben worden war, so dass im nächsten Schritt 70 die Checksumme berechnet wird. Im Schritt 80 erfolgt die Abfrage der Richtigkeit der ermittelten Checksumme durch Vergleich der berechneten mit der gespeicherten. Ist die Abfrage positiv, so wird in dem darauffolgenden Schritt 81 ein Prüfwort in den dafür vorgesehenen Speicherbereich des RAM geschrieben, wobei auch hier wieder dieser Speicherbereich mit demjenigen der Checksumme übereinstimmen kann. Im Ergebnis kann nach Schreiben des Prüfworts mit den Daten des dauerversorgten RAMs gearbeitet und der Motorbetrieb aufgenommen werden (Schritt 82). Sollte die in Schritt 70 ermittelte Checksumme nicht richtig sein, wird auf Powerfail erkannt, d.h. die im RAM vorhandenen Daten als nicht brauchbar verworfen. Im Schritt 84 erfolgt eine Neuinitialisierung des Motorbetriebs. Ein Powerfail liegt typischerweise dann vor, wenn die Batterie abgeklemmt, die Versorgung des RAMs des Steuergeräts also unterbrochen wurde, mit der Folge, dass im RAM abgelegte Daten zerstört werden.

Ist das Ergebnis der Prüfung im Schritt 60 negativ, wird also festgestellt, dass das Prüfwort nicht gelöscht bzw. zerstört ist, wird im Schritt 90 auf Nicht-Powerfail erkannt und der Motorbetrieb wieder aufgenommen (Schritt 91), z.B. durch Wiederholtstart über Betätigung des Zündschlüssels (KL 15 Reset).

Ein Verfahren zur Powerfail-Erkennung ist in der DE 196 01 804 A1 beschrieben. Dabei ist unter anderem vorgesehen, dass nach Auftreten eines Reset-Signals (Versorgungsspannung fällt unter Mindestpegel) ein fest vorgegebener Code mit dem Inhalt einer flüchtigen Speichereinrichtung verglichen und aufgrund eines Ergebnisses eines derartigen Vergleichs ein Signal abgegeben wird, das den weiteren Ablauf des Verfahrens bestimmt, nämlich Fortfahren mit dem vorliegenden Betriebszustand oder Neuinitialisierung.

Die DE 44 09 286 C1 beschreibt ein Verfahren zum Erkennen einer Ursache eines Reset-Vorgangs eines durch einen Mikroprozessor gesteuerten Systems sowie eine Schaltung zum Durchführen dieses Verfahrens. Hier wird der Reset-Vorgang entweder durch ein Einschalten einer externen Versorgungsspannung oder durch kurzzeitige Schwankungen der externen Versorgungsspannung ausgelöst.

Das anhand der Figuren 1 und 2 beschriebene Powerfail-Erkennungverfahren kann jedoch in bestimmten Situationen einen Datenverlust (Adaptionswerte, Fehlerspeicher etc.) nicht erkennen, wodurch schwerste Betriebsstörungen ausgelöst werden können. Wird z.B. die Batterie während des Steuergeräte-Nachlaufs 30 (vergleiche Figur 1) abgeklemmt, bevor die Checksumme geschrieben wurde oder allgemeiner das Prüfwort zerstört wurde, besteht die Möglichkeit, dass das Prüfwort eine Zeitlang intakt bleibt. In dieser Zeit können jedoch mangels Versorgungsspannung in RAM gespeicherte Daten verloren gehen (z.B. Daten zur λ-Regelung bei der Einspritzung). Erfolgt in dieser Situation ein Reset 50 (vergleiche Figur 2), wird im Schritt 60 festgestellt, dass das Prüfwort nicht gelöscht ist und in Folge dessen auf Nicht-Powerfail erkannt (Schritt 90). In diesem Fall würde der Motorbetrieb wieder aufgenommen werden (Schritt 91), wobei zum Motorbetrieb unvollständige oder falsche Daten aus dem RAM verwendet würden.

Bei diesem bekannten Verfahren zur Powerfail-Erkennung kann folglich der geschilderte Fall des Powerfails nur erkannt werden, wenn das Prüfwort nicht mehr erhalten geblieben ist. Insbesondere bei kurzen Unterbrechungen ist jedoch nicht sichergestellt, dass das Prüfwort zerfällt, bevor Informationen im RAM verlorengegangen sind

Ausgehend hiervon wird ein Verfahren mit den Merkmalen des Patentanspruchs 1, ein Steuergerät mit den Merkmalen des Patentanspruchs 9, ein Computerverfahren mit den Merkmalen des Patentanspruchs 10 und ein Computerprogrammprodukt mit den Merkmalen des Patentanspruchs 11 vorgestellt.

### Vorteile der Erfindung

Das erfindungsgemäße Verfahren dient der Überprüfung einer Gültigkeit von Daten, die in einem dauerversorgten Schreib-Lese-Speicher eines Steuergeräts abgelegt sind. Zur Feststellung einer Unterbrechung der Spannungsversorgung während des Betriebs oder während des Nachlaufs des Steuergeräts wird ein Prüfwort geprüft, wobei, sobald die Spannungsversorgung des Schreib-Lese-Speichers einen vorgegebenen Schwellenwert unterschreitet, dieses Prüfwort auf einen eine Unterbrechung der Spannungsversorgung anzeigenden Wert gesetzt wird. Dabei wird bei dem Nachlauf des Steuergeräts über den dauerversorgten Schreib-Lese-Speicher eine Checksumme gebildet und diese Checksumme bei einem Startvorgang des Steuergeräts in Abhängigkeit davon, ob das Prüfwort vorhanden ist, überprüft.

Während bisher das Prüfwort ausschließlich nach Schreiben der Checksumme einerseits oder erst nach einer ausreichend langen Unterbrechung der Stromversorgung zusammen mit den Daten im Speicher andererseits gelöscht oder zerstört worden ist, kann nunmehr erfindungsgemäß das Prüfwort bei einer (noch so kurzen) Unterbrechung der Spannungsversorgung gelöscht, d.h. auf einen eine Unterbrechung der Spannungsversorgung anzeigenden Wert gesetzt werden. Somit ist die Erkennung eines Powerfails (Unterbrechung der Spannungsversorgung) während des Betriebs und während des Nachlaufs des Steuergeräts (auch vor dem Schreiben der Checksumme) also unabhängig von einer vorhandenen Checksumme zuverlässig gegeben. Ein Unterbrechen der Spannungsversorgung bei ausgeschaltetem Steuergerät (also nach dem Steuergerätenachlauf mit erfolgtem Schreiben der Checksumme) kann wie bisher über die Prüfung der Checksummen festgestellt werden.

Ohne Einschränkung der Allgemeinheit soll im folgenden eine Zerstörung oder Löschung des Prüfworts eine Unterbrechung der Spannungsversorgung anzeigen. Selbstverständlich kann alternativ ein anderer Wert des Prüfwortes, soweit technisch möglich und sinnvoll, für eine Unterbrechung der Spannungsversorgung stehen.

Insbesondere ermöglicht die Erfindung, eine, wie oben anhand der Figuren 1 und 2 beschriebene Situation, bei der ein mögliches Löschen von Daten im Speicher auf Grund einer kurzen Unterbrechung der Spannungsversorgung nicht erkannt werden kann, zuverlässig zu vermeiden. Die Erfindung kann nämlich sicherstellen, dass das Prüfwort als erstes gelöscht oder zerstört wird, noch bevor die übrigen Daten im Speicher (RAM) mangels Spannungsversorgung instabil werden.

Bei einem gemäß Figur 2 geschilderten Verfahrensablauf nach einem Reset 50 garantiert die Erfindung, dass auch nach einer kurzen Unterbrechung der Versorgungsspannung des Schreib-Lese-Speichers bei entsprechender Vorgabe des Schwellenwerts das Prüfwort gelöscht wird. Im Schritt 60 gemäß Figur 2 wird folglich die Löschung des Prüfworts festgestellt, woraufhin im Schritt 70 die Checksumme über den betreffenden Bereich des dauerversorgten Schreib-Lese-Speichers neu berechnet und geprüft wird. Fand die Unterbrechung vor Schreiben der Checksumme (also während des normalen Betriebs oder während des Steuergerätenachlaufs) statt, wird die Überprüfung der Checksumme zwangsläufig negativ ausfallen. Fand die Unterbrechung hingegen nach dem Schreiben der Checksumme statt, wird die Überprüfung ebenfalls negativ ausfallen, sofern Daten im Speicher zerstört wurden.

Erfindungsgemäß ist somit sichergestellt, dass für alle im Betrieb vorkommenden Zustände ein Powerfail zuverlässig detektiert wird.

Als Schwellenwert wird sinnvollerweise ein Wert gewählt, unterhalb dessen eine zuverlässige Datenspeicherung im Schreib-Lese-Speicher nicht mehr gewährleistet ist.

Das Prüfwort kann in einem erfindungsgemäßen Verfahren als internes (d.h. im Schreib-Lese-Speicher liegend) oder als externes (außerhalb des Speichers liegendes) Prüfwort gewählt werden. Bei einem internen Prüfwort ist wesentlich, dass der betreffende, dem Prüfwort zugeordnete Speicherbereich bei einem Unterbrechen der Versorgungsspannung als erstes ausfällt, noch bevor der übrige Speicherbereich zerfällt.

Wesentlich ist, dass das erfindungsgemäße Prüfwort im Betrieb und im Nachlauf des Steuergeräts (solange keine Checksumme geschrieben ist) zur Verfügung steht. Nach ordnungsgemäßer Beendigung des Steuergerätenachlaufs (also nach Schreiben der Checksumme) wird das Prüfwort an sich nicht mehr benötigt, da die Powerfail-Erkennung dann zuverlässig alleine über die Checksummenprüfung erfolgen kann.

Es hat sich als zweckmäßig herausgestellt, ein externes Prüfwort zu verwenden, wobei insbesondere eine außerhalb des dauerversorgten Schreib-Lese-Speichers abgelegte, externe Information herangezogen werden kann. Diese externe Information muß erfindungsgemäß derart ausgelegt sein, dass bei einem Absinken der Versorgungsspannung unterhalb eines vorgegebenen Schwellenwerts diese Information zuverlässig auf einen Wert gesetzt wird, der eine Unterbrechung der Spannungsversorgung signalisiert. Diese externe, außerhalb des zu prüfenden Moduls liegende Information kann beispielsweise als ein fest vorgegebenes Muster abgelegt sein, das bei einer Unterbrechung der Spannungsversorgung des Schreib-Lese-Speichers bzw. des Steuergeräts (beispielsweise durch Abklemmen der Fahrzeug-Batterie bei einem Motorsteuergerät) zerstört oder gelöscht wird.

Es ist von Vorteil, bei einem Startvorgang, beispielsweise einem Neustart oder einem Zurücksetzen (Reset), des Steuergeräts zu prüfen, ob das Prüfwort vorhanden ist oder nicht. In diesem Fall signalisiert ein zerstörtes oder gelöschtes (erfindungsgemäßes) Prüfwort das Unterschreiten der Versorgungsspannung unter einen vorgegebenen Schwellenwert, also einen Powerfail. Das Vorhandensein des Prüfworts bedeutet dann einen Nicht-Powerfail.

Es ist sinnvoll, auch beim erfindungsgemäßen Verfahren beim Nachlauf des Steuergeräts über den dauerversorgten Schreib-Lese-Speicher eine Checksumme zu bilden. Hierbei wird zweckmäßigerweise nach Bilden und Schreiben der Checksumme am Ende des Steuergerätsnachlaufs das Prüfwort zerstört oder gelöscht. Es kann dann nach einem Startvorgang des Steuergeräts das in Figur 2 dargestellte Verfahren eingesetzt werden. In diesem Zusammenhang wird deutlich, dass die Erfindung prinzipiell eine Unterscheidung dahingehend erlaubt, ob ein ordnungsgemäßer Steuergerätenachlauf erfolgt ist, nach dessen Abschluß beispielsweise das Prüfwort zerstört oder gelöscht wird, oder ob eine Unterbrechung der Spannungsversorgung des Schreib-Lese-Speichers des Steuergeräts stattfand, in deren Folge das Prüfwort auf einen Wert gesetzt werden kann, der genau diese Unterbrechung signalisiert. Soll das gemäß den Figuren 1 und 2 geschilderte Verfahren eingesetzt werden, ist es zweckmäßig, in beiden Fällen das Prüfwort zu zerstören bzw. zu löschen. Diese Tatsache wird dann im Schritt 60 in Figur 2 geprüft.

Es bieten sich verschiedene Größen für das als externe Information abgelegte Prüfwort an. Als externe abgelegte Information kann ein Code, der bei einer Unterspannung des Steuergeräts zerfällt, bevor ein Inhalt des dauerhaften Schreib-Lese-Speichers zumindest teilweise gelöscht wird, herangezogen werden.

Als extern abzulegende Information für das Prüfwort bietet sich das sog. ZOREG-Bit aus dem Modul ME (D) 9 an. Dieses ZOREG-Bit wird derart verwendet, dass es nach dem Startvorgang, insbesondere nach dem Reset gesetzt wird, und dass es gelöscht wird, sobald die Checksumme während des Nachlaufs geschrieben worden ist. Das ZOREG-Bit ist ein Kennzeichen bzw. ein Feature der sog. MPC555-Familie. Es hat die Eigenschaft, bei einer Unterspannung des Steuergeräts noch vor einem Zerfall des dauerhaften Schreib-Lese-Speichers zu verfallen. Das ZOREG-Bit kann wegen seiner hohen Stromaufnahme nicht über ein Ende des Nachlaufs hinaus verwendet werden. Es erfüllt somit die an ein erfindungsgemäßes Prüfwort zu stellende Bedingung, daß es während des Betriebes und während des Nachlaufs des Steuergeräts verwendbar sein muss.

Bei Verwendung des sogenannten ZOREG-Bit ist folglich eine Unterbrechung der Spannungsversorgung während des Nachlaufs des Speichergeräts sowie während des normalen Motorbetriebs durch dieses ZOREG-Bit gesichert, während eine solche Unterbrechung nach dem Steuergerätenachlauf durch das bekannte Bilden der Checksumme gesichert werden kann. Somit bietet die Erfindung hundertprozentigen Schutz bei einer Löschung von Daten im Schreib-Lese-Speicher.

Zur Realisierung des Verfahrens ist ebenfalls denkbar, dass für das Prüfwort als extern abgelegte Information eine Kaltstartinformation, insbesondere des Moduls CY315 herangezogen wird. Diese Kaltstartinformation als Prüfwort ist ebenfalls als externe Information und somit ausserhalb des dauerhaften Schreib-Lese-Speichers ablegbar. Bei einem herkömmlichen Betrieb nimmt das Modul CY315 dann einen Kaltstartzustand ein, wenn sich das Steuergerät am Ende des Nachlaufs, nachdem die Checksumme geschrieben worden ist, ausschaltet oder wenn die Versorgungsspannung, bspw. nach einem Abklemmen des Steuergeräts von der Batterie des Fahrzeugs, unterbrochen wurde.

Das erfindungsgemäße Steuergerät weist einen dauerversorgten Schreib-Lese-Speicher, in dem Daten abgelegt sind, und eine Recheneinrichtung, die dazu ausgebildet ist, eine Gültigkeit dieser Daten erfindungsgemäß zu überprüfen, auf. Es ist insbesondere vorgesehen, dass das Prüfwort als externe Information außerhalb des dauerversorgten Schreib-Lese-Speichers ablegt ist.

Das erfindungsgemäße Computerprogramm dient dazu, alle Schritte des erfindungsgemäßen Verfahrens durchzuführen, wenn das Computerprogramm auf einem Computer oder einer entsprechenden Recheneinrichtung, insbesondere in dem erfindungsgemäßen Steuergerät, durchgeführt wird.

Das erfindungsgemäße Computerprogrammprodukt mit Programmcodemitteln, die auf einem computerlesbaren Datenträger gespeichert sind, ist dazu vorgesehen, das erfindungsgemäße Verfahren durchzuführen, wenn das Computerprogramm auf einem Computer oder einer entsprechenden Recheneinrichtung, insbesondere in dem erfindungsgemäßen Steuergerät, durchgeführt wird.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnung

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt in schematischer Darstellung ein Ablaufdiagramm für einen Steuergerätenachlauf.
- Figur 2: zeigt ein schematisches Diagramm des Startvorgangs eines Steuergeräts für den Motorbetrieb einschließlich der Überprüfung der Gültigkeit von Daten im Schreib-Lese-Speicher des Steuergeräts.
- Figur 3: zeigt ein schematisches Diagramm für einen bevorzugten Ablauf eines Startvorgangs in einer Variante des erfindungsgemäßen Verfahrens.
- Figur 4: zeigt in schematischer Darstellung einen bevorzugten Ablauf eines Nachlaufs in einer Variante des erfindungsgemäßen Verfahrens.
- Figur 5: zeigt in schematischer Darstellung ein Steuergerät und ein externes Modul.

Die Figuren 1 und 2 sind bereits in der Beschreibungseinleitung ausführlich behandelt worden. Es sei an dieser Stelle nochmals explizit darauf hingewiesen, dass die vorliegende Erfindung sich auch des dort beschriebenen Ablaufs für einen Startvorgang bzw. für einen Steuergerätenachlauf bedienen kann.

Die Figuren werden zusammenhängend und übergreifend beschrieben, gleiche Bezugszeichen bezeichnen gleiche Bauteile.

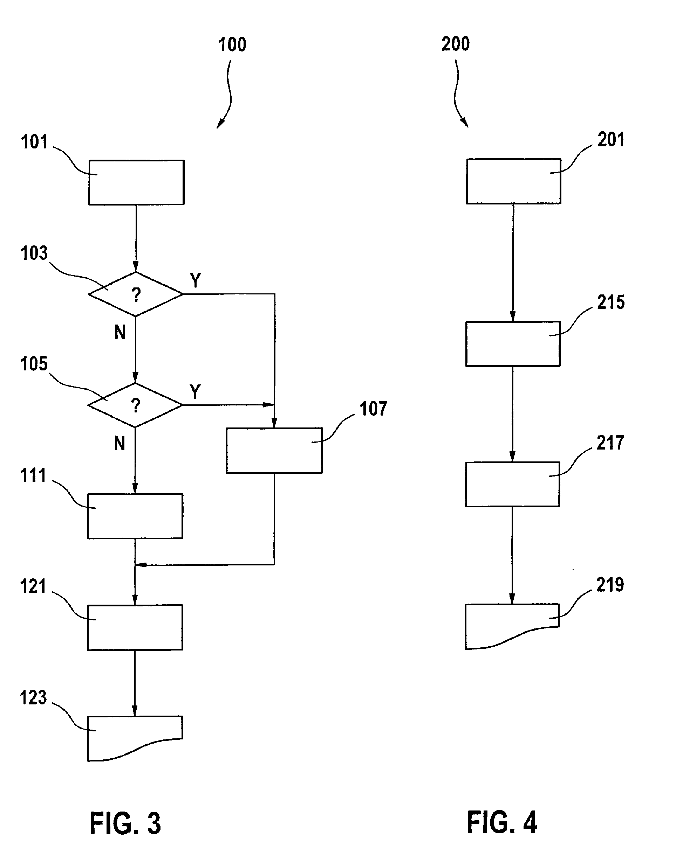

Die schematischen Diagramme der Figuren 3 und 4 zeigen jeweils eine bevorzugte Ausgestaltung eines Startvorgangs 100 bzw. eines Nachlaufs 200, bei einem Ablauf einer möglichen Variante des erfindungsgemäßen Verfahrens. Der in Figur 3 gezeigte Startvorgang 100 erfolgt insbesondere nach einem Reset 101 eines Steuergeräts und/oder eines dauerversorgten Schreib-Lese-Speichers.

Nach dem Diagramm aus Figur 3 erfolgt bei dem Startvorgang 100 nach dem Reset 101 in einem ersten Schritt 103 eine Überprüfung des erfindungsgemäßen Prüfworts. Im vorliegenden Fall ist dieses Prüfwort als ZOREG-Bit ausserhalb des Schreib-Lese-Speichers und somit als externe Information abgelegt. Falls das ZOREG-Bit nicht vorhanden sein sollte (N) erfolgt in einem zweiten Schritt 105 eine Überprüfung einer Checksumme. Für den Fall, dass das ZOREG-Bit vorhanden sein sollte (Y) oder für den Fall, dass die Checksumme korrekt sein sollte (Y), wird der Parameter B_pwf im Schritt 107 als falsch gesetzt: "B_pwf=FALSE". Es liegt dann kein Powerfail vor und die Daten im Speicher können verwendet werden.

Falls die Checksumme nach dem zweiten Schritt 105 nicht korrekt sein sollte (N) werden in einem Schritt 111 Daten aus einem Flash-Memory oder aus einem EEPROM in den Speicher (NV = non volatile) geladen.

Abschließend wird bei dem beschriebenen Startvorgang 100 des Steuergeräts das ZOREG-Bit in einem Schritt 121 als ein Prüfwort, das außerhalb des dauerhaften Schreib-Lese-Speichers als externe Bit-Information abgelegt ist, eingeschaltet. Somit ist der Starvorgang 100 abgeschlossen. In einem abschließenden Schritt 123 des Startvorgangs 100 wird ein eigentliches Programm des Steuergeräts und/oder des dauerhaften Schreib-Lese-Speichers gestartet (z.B. zur Aufnahme eines Motorbetriebs bei einem Kraftfahrzeug).

Nach Beendigung dieses Programms oder eines Motorbetriebs wird das Steuergerät abgeschaltet, wobei das Steuergerät und/oder der dauerhafte Schreib-Lese-Speicher heruntergefahren wird. Der dabei erfolgende Nachlauf 200 nach dem Programmende 201 ist anhand des in Figur 4 gezeigten Diagramms schematisch dargestellt.

Nach dem Programmende 201 wird üblicherweise der Speicherinhalt in einen EEPROM und/oder ein Flash-Memory geschrieben. Anschließend wird in einem Schritt 215 die Checksumme gebildet, wobei hier über den Inhalt des Schreib-Lese-Speichers (und evtl. auch des EEPROMs) summiert wird.

In einem Schritt 217 wird das ZOREG-Bit wieder ausgeschaltet (gelöscht). Danach schaltet sich in einem letzten Schritt 219 der Rechner, also das Steuergerät, ab.

Wie aus den in den beiden Figuren 3 und 4 gezeigten Diagrammen hervorgeht, ist das ZOREG-Bit als Prüfwort, nachdem es im Schritt 121 des Startvorgangs 100 geschrieben (eingeschaltet) wurde, während des Betriebs des Steuergeräts und/oder des dauerhaften Schreib-Lese-Speichers, also während einer Ausführung des Programms, bis zum Schritt 217 während des Nachlaufs 200 regulär existent. In diesem Schritt 217 wird das ZOREG-Bit und somit das Prüfwort, das als externe Information abgelegt ist, deaktiviert, d.h. gelöscht oder ausgeschaltet.

Schaltet sich das Steuergerät und somit der dauerhafte Schreib-Lese-Speicher mit dem letzten Schritt 219 des Nachlaufs 200 regulär ab, so ist dieses ZOREG-Bit bei dem Neustart 100 des Steuergeräts und somit des dauerhaften Schreib-Lese-Speichers bei Überprüfung des ZOREG-Bits in dem zweiten Schritt 103 des Startvorgangs 100 nicht vorhanden (N). In diesem Fall wird die Checksumme in dem zweiten Schritt 105 überprüft.

Sollte während des Nachlaufs 200 vor dem Bilden und Schreiben der Checksumme (Schritt 215) eine Unterbrechung der Spannungsversorgung erfolgen (beispielsweise weil die Batterie absichtlich oder versehentlich abgeklemmt wurde oder sich entleert hat), wird das ZOREG-Bit deaktiviert, also ausgeschaltet. Wie erwähnt, benötigt die Versorgung des ZOREG-Bit so viel Strom, dass sichergestellt ist, dass auch bei einer kurzzeitigen Unterbrechung der Stromversorgung das ZOREG-Bit ausgeschaltet wird. Hierdurch wird erfindungsgemäß sichergestellt, dass bei einem sich anschließenden Startvorgang 100 (vergleiche Figur 3) das nicht Vorhandensein des ZOREG-Bit erkannt (Schritt 103) und somit die Checksumme überprüft wird (Schritt 105). Durch Prüfen der Checksumme kann dann festgestellt werden, ob bei einer auch noch so kurzfristigen Unterbrechung der Spannungsversorgung Daten im Speicher gelöscht worden sind. Die erfindungsgemäße Datenüberprüfung ist somit für alle möglichen Betriebszustände des Steuergeräts zuverlässig.

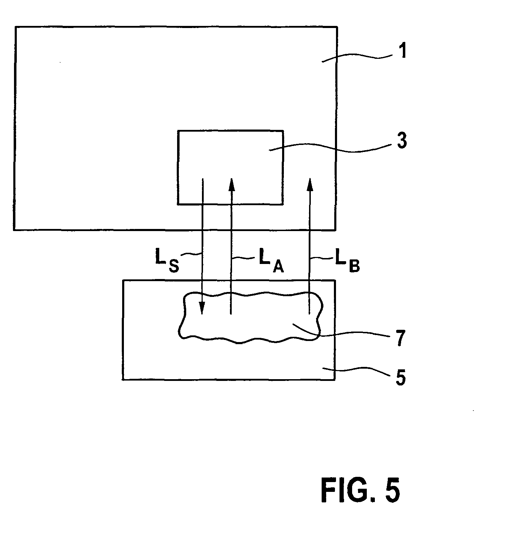

Figur 5 zeigt in schematischer Darstellung ein Steuergerät 1 mit einem dauerhaften Schreib-Lese-Speicher 3 sowie einem externen Modul 5, das dem Steuergerät 1 und/oder dem dauerhaften Schreib-Lese-Speicher 3 zugeordnet ist. Das Steuergerät 1 mit dem dauerhaften Schreib-Lese-Speicher 3 sowie das Modul 5 befinden sich in einer Vorrichtung, insbesondere einem Kraftfahrzeug. Das externe Modul 5 ist derart ausgebildet, dass darin Informationen ablegbar sind.

Es ist vorgesehen, eine Gültigkeit von Daten, die in dem dauerversorgten Schreib-Lese-Speicher 3 des Steuergeräts 1 abgelegt sind, erfindungsgemäß zu überprüfen. In vorliegender Ausführung ist das Prüfwort als externe Information 7 bspw. als Muster in dem Modul 5 außerhalb des dauerversorgten Schreib-Lese-Speichers 1 abgelegt. Zur Überprüfung des Prüfworts wird diese externe Information 7 herangezogen. Bei einer regulären Funktionsweise des Steuergeräts 1 und somit des dauerversorgten Schreib-Lese-Speichers 3 wird das Prüfwort nach dem Startvorgang als die externe Information 7 in dem Modul 5 abgelegt (Pfeil L_{S}) und bei einem Nachlauf des Steuergeräts aus diesem Modul wieder gelöscht (Pfeil L_{A}). Falls jedoch eine Spannungsversorgung für das Steuergerät 1 auch nur kurzzeitig unter einen Sollwert abfallen oder unterbrochen werden sollte, wird das als externe Information 7 abgespeicherte Prüfwort ebenfalls aus dem Modul 5 gelöscht (Pfeil L_{B}).

Durch die Maßnahme, das Prüfwort als externe Information 7 in dem Modul 5 und somit außerhalb des dauerversorgten Schreib-Lese-Speichers 3 abzulegen, kann bei dem Startvorgang des Steuergeräts 1 aufgrund eines Nichtvorhandenseins oder Vorhandenseins der externen Information 7 in zuverlässiger Weise darüber eine Aussage getroffen werden, ob für das Steuergerät 1 ein Powerfail oder ein Nicht-Powerfail während des normalen Betriebs oder während des Steuergerätenachlaufs vorliegt.

## Patentansprüche

1. Verfahren zum Überprüfen der Gültigkeit von Daten, die in einem dauerversorgten Schreib-Lese-Speicher (3) eines Steuergeräts (1) abgelegt sind, wobei zur Feststellung einer Unterbrechung der Spannungsversorgung während des Betriebs oder während des Nachlaufs (200) des Steuergeräts (1) ein Prüfwort geprüft wird, und wobei, sobald die Spannungsversorgung des Schreib-Lese-Speichers (3) einen vorgegebenen Schwellenwert unterschreitet, dieses Prüfwort auf einen eine Unterbrechung der Spannungsversorgung anzeigenden Wert gesetzt wird,
**dadurch gekennzeichnet,**
**dass** bei dem Nachlauf (200) des Steuergeräts (1) über den dauerversorgten Schreib-Lese-Speicher (3) eine Checksumme gebildet wird und diese Checksumme bei einem Startvorgang (100) des Steuergeräts (1) in Abhängigkeit davon, ob das Prüfwort vorhanden ist, überprüft wird.

2. Verfahren nach Anspruch 1, bei dem als Prüfwort eine außerhalb des dauerversorgten Schreib-Lese-Speichers (3) abgelegte, externe Information (7) herangezogen wird.

3. Verfahren nach Anspruch 1 oder 2, bei dem das Prüfwort zerstört oder gelöscht wird, wenn die Spannungsversorgung des Schreib-Lese-Speichers (3) den vorgegebenen Schwellenwert unterschreitet.

4. Verfahren nach einem der vorhergehenden Ansprüche, bei dem das Prüfwort bei oder nach dem Nachlauf (200) des Steuergeräts (1) zerstört oder gelöscht wird.

5. Verfahren nach einem der vorhergehenden Ansprüche, bei dem bei einem Startvorgang (100), bspw. bei einen Neustart oder einem Zurücksetzen (101), des Steuergeräts (1) geprüft wird, ob das Prüfwort vorhanden ist.

6. Verfahren nach einem der vorhergehenden Ansprüche, bei dem eine Prüfung der Checksumme erfolgt, wenn das Prüfwort nicht vorhanden ist, wobei bei positivem Ergebnis der Checksummenüberprüfung das Prüfwort geschrieben bzw. die externe Information gesetzt wird, und bei dem von einer Gültigkeit der im Schreib-Lese-Speicher (3) vorhandenen Daten ausgegangen wird, wenn das Prüfwort vorhanden ist.

7. Verfahren nach einem der Ansprüche 1 bis 6, bei dem als externe Information (7) ein Code, der bei einer Unterspannung des Steuergeräts (1) zerfällt, herangezogen wird.

8. Verfahren nach einem der Ansprüche 1 bis 6, bei dem als externe Information (7) eine Kaltstartinformation herangezogen wird.

9. Steuergerät mit einem dauerversorgten Schreib-Lese-Speicher (3), in dem Daten abgelegt sind, und mit einer Recheneinrichtung, die dazu ausgebildet ist, eine Gültigkeit dieser Daten gemäß eines Verfahrens nach einem der Ansprüche 1 bis 8 zu überprüfen.

10. Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinrichtung, insbesondere in einem Steuergerät nach Anspruch 9, durchgeführt wird.

11. Computerprogrammprodukt mit Programmcodemitteln, die auf einem computerlesbaren Datenträger gespeichert sind, um ein Verfahren nach einem der Ansprüche 1 bis 8 durchzuführen, wenn das Computerprogramm auf einem Computer oder einer entsprechenden Recheneinrichtung, insbesondere in einem Steuergerät nach Anspruch 9, durchgeführt wird.

## Claims

1. Method for checking the validity of data which is stored in a permanently supplied read/write memory (3) of a control device (1), wherein a checkword is checked in order to determine interruption of the voltage supply during operation or during running on (200) of the control device (1), and wherein as soon as the voltage supply of the read/write memory (3) drops below a predefined threshold value this checkword is set to a value which indicates an interruption in the voltage supply, **characterized in that** when the control device (1) runs on (200) a checksum is formed by means of the permanently supplied read/write memory (3), and when there is a starting process (100) of the control device (1) this checksum is checked as a function of whether the checkword is present.

2. Method according to Claim 1, in which an external information item (7) which is stored outside the permanently supplied read/write memory (3) is used as the checkword.

3. Method according to Claim 1 or 2, in which the checkword is destroyed or deleted if the voltage supply of the read/write memory (3) drops below the predefined threshold value.

4. Method according to one of the preceding claims, in which the checkword is destroyed or deleted during or after the running on (200) of the control device (1).

5. Method according to one of the preceding claims, in which when there is a starting process (100), for example in the event of a restart or of resetting (101), of the control device (1) it is checked whether the checkword is present.

6. Method according to one of the preceding claims, in which the checksum is checked if the checkword is not present, wherein when there is a positive result of the checking of the checksum the checkword is written or the external information is set, and in which it is assumed that the data present in the read/write memory (3) is valid if the checkword is present.

7. Method according to one of Claims 1 to 6, in which a code which is cancelled if there is an undervoltage of the control device (1) is used as the external information item (7).

8. Method according to one of Claims 1 to 6 in which a cold start information item is used as the external information item (7).

9. Control device having a permanently supplied read/write memory (3) in which data is stored, and having a computing device which is designed to check a validity of this data according to a method according to one of Claims 1 to 8.

10. Computer program having program code means in order to carry out all the steps of a method according to one of Claims 1 to 8 if the computer program is carried out on a computer or a corresponding computing device, in particular in a control device according to Claim 9.

11. Computer program product having program code means which are stored on a computer-readable data carrier in order to carry out a method according to one of Claims 1 to 8, if the computer program is carried out on a computer or a corresponding computing device, in particular in a control device according to Claim 9.

## Revendications

1. Procédé pour vérifier la validité de données enregistrées dans une mémoire lecture/écriture (3) à alimentation permanente d'un appareil de commande (1) et pour constater une interruption de la tension d'alimentation pendant le fonctionnement ou après la poursuite de fonctionnement (200) de l'appareil de commande (1) on vérifie un mot de contrôle et dès que la tension d'alimentation de la mémoire lecture/écriture (3) passe en dessous d'un seuil prédéfini, ce mot de contrôle est mis à une valeur indiquant une interruption de la tension d'alimentation,
**caractérisé en ce que**
lors de la poursuite de fonctionnement (200) de l'appareil de commande (1), la mémoire écriture/lecture (3) à alimentation permanente forme une somme de contrôle qui est vérifiée en fonction de la présence du mot de contrôle lors d'une opération de démarrage (100) de l'appareil de commande (1).

2. Procédé selon la revendication 1,
**caractérisé en ce que**
le mot de contrôle est une information externe (7) enregistrée en dehors de la mémoire écriture/lecture (3) à alimentation permanente.

3. Procédé selon la revendication 1 ou 2,
**caractérisé en ce que**
le mot de contrôle est détruit ou effacé si la tension d'alimentation de la mémoire écriture/lecture (3) passe en dessous du seuil prédéfini.

4. Procédé selon l'une des revendications précédentes,
selon lequel le mot de contrôle est détruit ou vérifié par ou après la poursuite de fonctionnement (200) de l'appareil de commande (1).

5. Procédé selon l'une des revendications précédentes,
selon lequel lors d'une opération de démarrage (100), par exemple d'un nouveau démarrage ou d'une remise à l'état initial (101), l'appareil de commande (1) vérifie la présence du mot de contrôle.

6. Procédé selon l'une ou plusieurs des revendications précédentes,
selon lequel on vérifie la somme de contrôle si le mot de contrôle n'est pas présent et en cas de résultat positif de la vérification de la somme de contrôle, on inscrit le mot de contrôle ou on met à l'état, l'information externe et on suppose que les données de la mémoire écriture/lecture (3) sont valables si le mot de contrôle est présent.

7. Procédé selon l'une des revendications 1 à 6,
selon lequel comme information externe (7) on utilise un code qui se détruit en cas de sous tension de l'appareil de commande (1).

8. Procédé selon l'une des revendications 1 à 6,
selon lequel comme information externe (7), on utilise une information de démarrage à froid.

9. Appareil de commande équipé d'une mémoire écriture/lecture (3) à alimentation permanente dans laquelle sont enregistrées des données et une installation de calcul permettant de vérifier la validité des données selon le procédé de l'une des revendications 1 à 8.

10. Programme d'ordinateur comportant des moyens de code de programme pour exécuter toutes les étapes d'un procédé selon l'une des revendications 1 à 8 lorsque le programme d'ordinateur est exécuté sur un ordinateur ou une installation de calcul correspondante, notamment dans un appareil de commande selon la revendication 9.

11. Produit programme d'ordinateur comportant des moyens de code de programme enregistrés sur un support de données que peut lire un ordinateur pour exécuter un procédé selon l'une des revendications 1 à 8 lorsque le programme d'ordinateur est exécuté sur un ordinateur ou dans une installation de calcul correspondante, notamment dans un appareil de commande selon la revendication 9.
